# EUROPEAN PATENT APPLICATION

(11) **EP 4 491 907 A1**
(43) Date of publication of application: **15.01.2025**
(21) Application number: 24187703.4
(22) Date of filing: 10.07.2024
(51) Int. Cl.: F16H 25/24, F16H 25/20, B64D 29/06

(54) **NUT FOR ACTUATOR SYSTEM AND ACTUATOR SYSTEM COMPRISING THE SAME**

(30) Priority: 13.07.2023 IN 202311047163
(71) Applicant: Hamilton Sundstrand Corporation, Charlotte, NC 28217-4578 (US)
(72) Inventor: TRIPATHI, Amit Kumar, Banbury (GB)
(74) Representative: Dehns

(57) **Abstract**

A nut for use in an actuator assembly having a rotatable screw includes an outer nut portion (62) and an inner nut portion (60) removably coupled to the outer nut portion (62). The inner nut portion (60) is rotatably couplable to the rotatable screw. At least one anti-rotation pin (90) is positionable between the outer nut portion (62) and the inner nut portion (60) to restrict rotation of the inner nut portion (60) relative to the outer nut portion (62).

## Description

### CROSS-REFERENCE TO RELATED APPLICATIONS

This application claims priority to Indian Patent Application No. 202311047163 filed July 13, 2023.

### BACKGROUND

Embodiments of the present disclosure relate to an actuator assembly, and more particularly to a nut of an actuator assembly used for opening and closing of the cowl doors of an aircraft engine.

Leadscrews and nuts may be used in aircraft and avionic application for various actuations. Such actuators can include, for example, doors, flaps, thrust reverses, and the like. Conventionally, such actuators may be formed of metallic screws and nuts. However, such metal-to-metal configurations can cause excess wear and/or may require additional features, such as lubrication and the like. One alternative to such metal-metal actuators is to use self-lubricating plastics. However, engineered plastic nuts against metallic screws may have a low wear rate, etc., as compared to metal-metal configurations (e.g., bronze nut and metallic screws). There is therefore a need for an improved screw-shaft and nut configuration within an actuator assembly.

### BRIEF DESCRIPTION

According to an embodiment, a nut for use in an actuator assembly having a rotatable screw includes an outer nut portion and an inner nut portion removably coupled to the outer nut portion. The inner nut portion is rotatably couplable to the rotatable screw. At least one anti-rotation pin is positionable between the outer nut portion and the inner nut portion to restrict rotation of the inner nut portion relative to the outer nut portion.

In addition to one or more of the features described above, or as an alternative, in further embodiments the nut is fixedly mounted within the actuator assembly such that the rotatable screw is movable relative to the nut.

In addition to one or more of the features described above, or as an alternative, in further embodiments the nut is translatable along an axis relative to the rotatable screw.

In addition to one or more of the features described above, or as an alternative, in further embodiments the outer nut portion has a flange arranged at an exterior surface thereof. The flange is connectable to a component to be moved by the actuator assembly.

In addition to one or more of the features described above, or as an alternative, in further embodiments the outer nut portion and the inner nut portion are formed different materials.

In addition to one or more of the features described above, or as an alternative, in further embodiments the inner nut portion is formed from a polymer.

In addition to one or more of the features described above, or as an alternative, in further embodiments the outer nut portion is formed from a metal.

In addition to one or more of the features described above, or as an alternative, in further embodiments including a first plurality of threads arranged at an outer surface of the inner nut portion and a second plurality of threads arranged at an inner surface of the outer nut portion.

In addition to one or more of the features described above, or as an alternative, in further embodiments the first plurality of threads and the second plurality of threads are microthreads.

In addition to one or more of the features described above, or as an alternative, in further embodiments including a plurality of threads arranged at an inner surface of the inner nut portion. The plurality of threads being couplable to the rotatable screw.

In addition to one or more of the features described above, or as an alternative, in further embodiments including another plurality of threads arranged at an outer surface of the inner nut portion. The plurality of threads has a first threads per inch and the another plurality of threads has a second threads per inch. The second threads per inch is greater than the first threads per inch.

According to an embodiment, an actuator assembly for controlling movement of an aircraft engine door includes a screw rotatable about an axis and a nut rotatably engaged with the screw. The nut includes an outer nut portion and an inner nut portion removably coupled to the outer nut portion. The inner nut portion is rotatably fixed to the outer nut portion.

In addition to one or more of the features described above, or as an alternative, in further embodiments the nut includes at least one anti-rotation pin positioned between the outer nut portion and the inner nut portion to restrict rotation of the inner nut portion relative to the outer nut portion.

In addition to one or more of the features described above, or as an alternative, in further embodiments the outer nut portion and the inner nut portion are formed different materials.

In addition to one or more of the features described above, or as an alternative, in further embodiments the inner nut portion is formed from a polymer.

In addition to one or more of the features described above, or as an alternative, in further embodiments the outer nut portion is formed from a metal.

In addition to one or more of the features described above, or as an alternative, in further embodiments including a plurality of threads arranged at an inner surface of the inner nut portion. The plurality of threads is couplable the screw.

In addition to one or more of the features described above, or as an alternative, in further embodiments a first plurality of threads is arranged at an outer surface of the inner nut portion and a second plurality of threads is arranged at an inner surface of the outer nut portion.

In addition to one or more of the features described above, or as an alternative, in further embodiments the first plurality of threads and the second plurality of threads are microthreads.

In addition to one or more of the features described above, or as an alternative, in further embodiments the nut is coupled to a cowl door, the actuator assembly being operable to move the aircraft engine door between an open position and a closed position.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic illustration of a perspective view of an aircraft;
FIG. 2 is a schematic illustrated of an actuator for opening and closing an aircraft engine door according to an embodiment;
FIG. 3 is a cross-sectional view of a nut of the actuator of FIG. 2 according to an embodiment;
FIG. 4 is a cross-sectional view of an outer nut portion of the nut of FIG. 3 according to an embodiment; and
FIG. 5 is a perspective view of an inner nut portion of the nut of FIG. 3 according to an embodiment.

### DETAILED DESCRIPTION

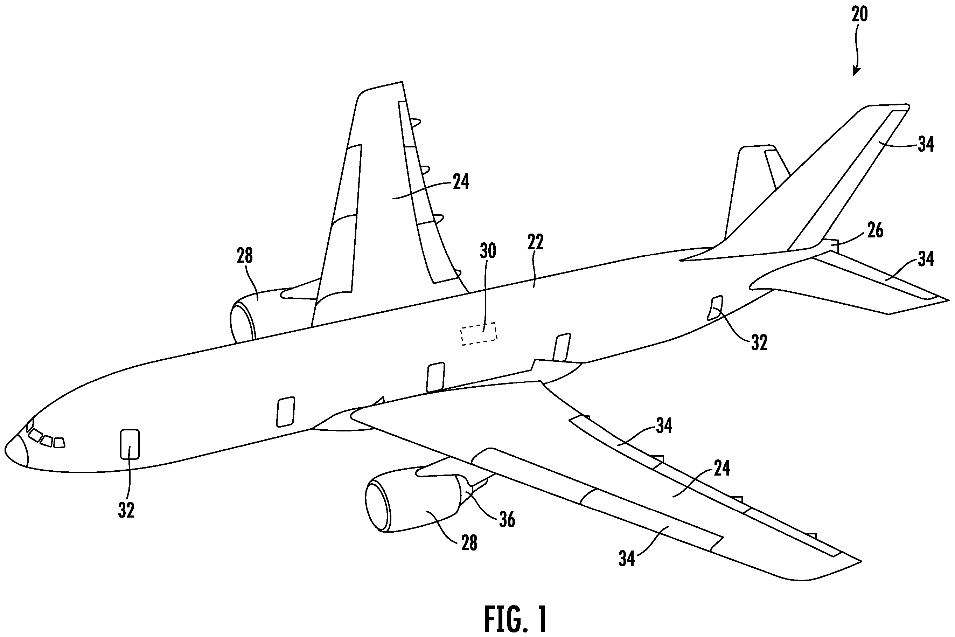

With reference to FIG. 1, a schematic illustration of an aircraft 20 that may incorporate embodiment of the present disclosure is shown. The aircraft includes a fuselage 22, wings 24, and a tail 26. In the illustrated, non-limiting embodiment, the aircraft 20 includes wing-mounted aircraft power systems 28. The wing-mounted aircraft power systems 28 may be conventional gas turbine engines or other propulsion systems known in the art. In other configurations, aircraft employing embodiments of the present disclosure may include fuselage-mounted and/or tail-mounted configurations. The aircraft power systems 28 may be used to generate thrust for flight and may also be used to generate onboard electrical power. The aircraft 20 may also include one or more auxiliary power units 30 that may be configured to generate power. The aircraft 20 includes doors 32 and aircraft flight control surfaces 34 (e.g., ailerons, flaps, flaperons, stabilizers, etc.). Additionally, the aircraft power systems 28 may include thrust reversers 36, as will be appreciated by those of skill in the art.

Control or actuation of various components of the aircraft 20 may be enabled through the use of actuators. Actuators onboard aircraft can be used for, for example, actuating the doors 32, the flight control surfaces 34, the thrust reversers 36, landing gear, interior doors, seats, and the like. The actuators may be configured as leadscrew and nut configurations. These actuators are typically linear actuators that rotate a nut to drive the leadscrew in an axial direction along an axis of the leadscrew or rotate screw to drive the nut in axial direction.

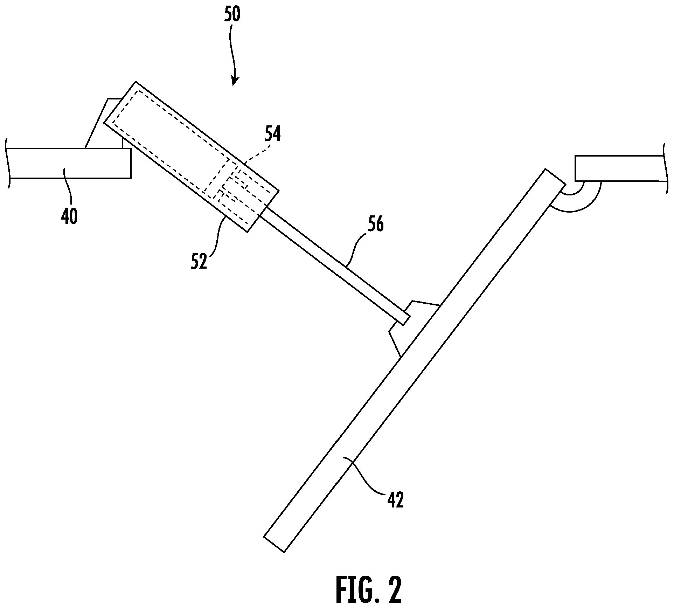

Referring now to FIG. 2, an actuator 50 that may incorporate embodiments of the present disclosure is illustrated. FIG. 2 shows part of an engine housing 40 including a door 42, such as a cowl door for example, moveable between a closed position and an open position. In FIG. 2, the door 42 is shown in its open position. The actuator 50 is arranged to drive the door 42 between the closed position and the open position. In the example shown, the actuator 50 is in the form of a linear actuator including a housing 52 that contains a nut 54. The nut 54 is rotatable within the housing 52 and drives linear motion of a screw 56, such as a ball screw for example. By rotating the nut 54, the screw 56 will translate, such as extend and retracted, to drive the door 42 between the closed position and the open position. However, in other embodiments, the screw 56 is rotatable in a fixed axial position such that the nut 54 will translate along the axis of the screw 56 between an extended and retracted position. This type of actuation may be used for any controllable component onboard an aircraft, such as the various components described above and as appreciated by those of skill in the art.

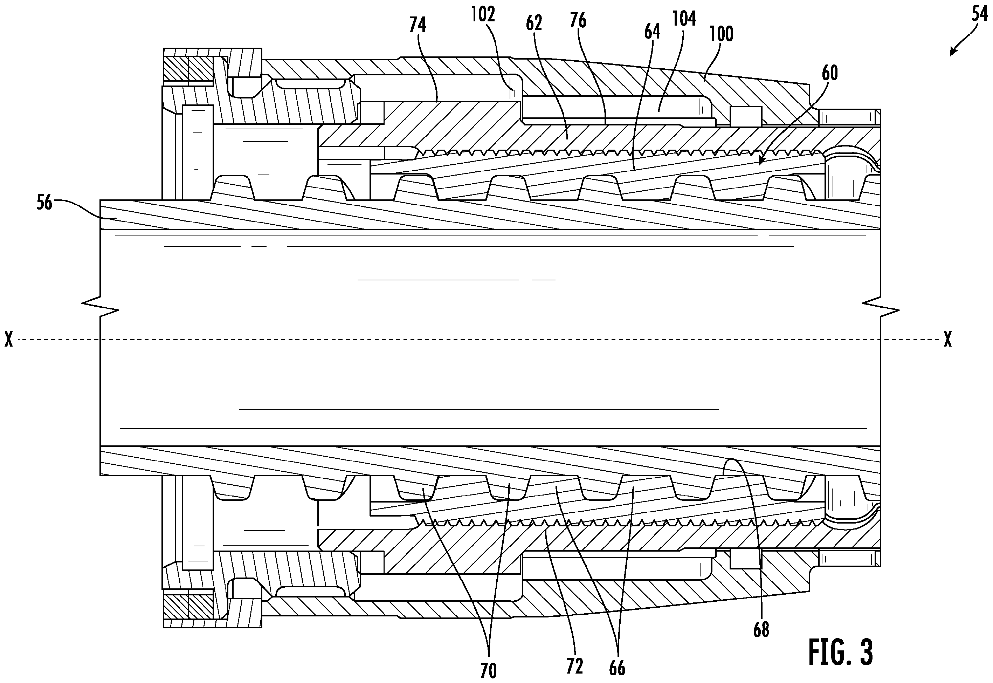

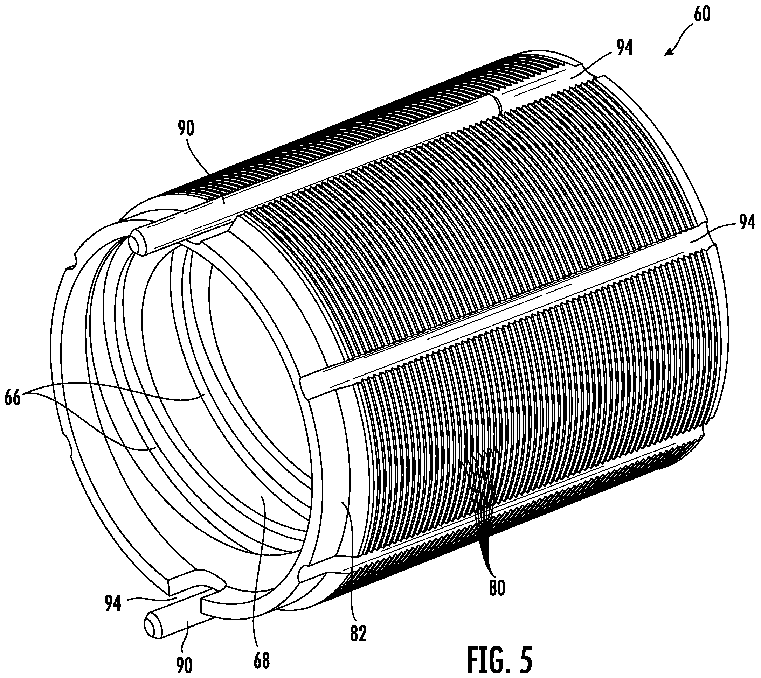

With reference now to FIG. 3-5, an example of the nut 54 of the actuator 50 is illustrated in more detail. As shown, the nut 54 may be an assembly having an inner nut portion 60 and an outer nut portion 62 formed from different materials. In the illustrated, non-limiting embodiment, the inner nut portion 60 is formed from a compliant material, such as a polymer for example, and the outer nut portion is formed from a rigid material, such as a metal material. However, it should be understood that other suitable materials are also within the scope of the disclosure. The inner nut portion 60, also referred to herein as a bush nut, may have a generally annular body 64. The inner nut portion 60 is movably coupled to the rotatable screw 56. In the illustrated, non-limiting embodiment, the inner nut portion 60 includes a first plurality of threads 66 formed at an interior surface 68 of the body 64. The first plurality of threads 66 is complementary to and configured to rotatably engage the plurality of threads 70 formed about an exterior surface of the screw 56.

The outer nut portion 62, also referred to herein as a casing, may also have a generally annular body 72. In an embodiment, an axial length of the outer nut portion 62 is greater than the axial length of the inner nut portion 60. However, embodiments where the inner and outer nut portions 60, 62 are generally the same length, or where the inner nut portion 60 has a greater length than the outer nut portion 62 are also within the scope of the disclosure. In an embodiment, at least one flange 74 extends radially outward from an exterior surface 76 of the outer nut portion 62. As shown, the outer nut portion 62 may be arranged within a support structure 100 of a movable component. The flange 74 may be configured to abut or contact one or more adjacent protrusions or surfaces 102 such that this engagement between the flange 74 and a surface 102 of the support structure 100 transfers axial movement of the nut to the movable component.

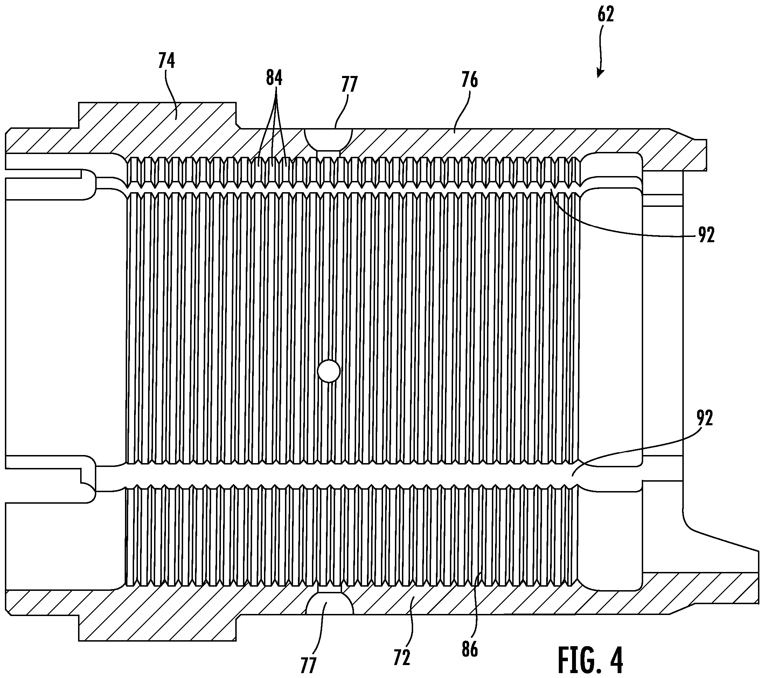

As shown in FIG. 4, one or more grooves 77, such as semi-circular recesses for example, may be formed in the exterior surface 76 of the outer nut portion 62. In such embodiments, a plurality of elongated recesses 104 may be formed at an inner surface of the support structure 100. A plurality of engagement members (not shown) are receivable within a groove 77 and a corresponding elongated recess 104, respectively. Such a connection restricts rotation of the outer nut portion 62 relative to the support structure 100 while allowing translation of the outer nut portion 62 relative to the support structure 100. The limited axial motion of the outer nut portion 62 allowable relative to the support structure 100 may be referred to as "lost motion." This clearance or lost motion gap defining the allowed lost motion movement is intended to accommodate movement resulting from vibration deflection that occurs when the movable component, such as a cowl door for example, is in a stowed state. Accordingly, translational motion of the outer nut portion 62 resulting from rotation of the screw 56 does not cause a corresponding movement of the support structure 100 and movable component until after travelling the lost motion gap.

In other embodiments, the flange 74 may be coupled directly or indirectly to a movable component. In such embodiments, the translational movement of the nut 54 resulting from rotation of the screw 56 about an axis causes corresponding component connected to the nut 54, such as a cowl door 42 of an engine for example, to move.

As shown in FIG. 3, the inner nut portion 60 is removably couplable to the outer nut portion 62. The inner diameter of outer nut portion 62 may be generally equal to the outer diameter of the inner nut portion 60 such that the inner nut portion 60 is receivable within the hollow interior of the outer nut portion 62. In the illustrated, non-limiting embodiment, when the inner and outer nut portions 60, 62 are coupled, the inner and outer nut portions 60, 62 are mounted concentrically about an axis X.

The inner and outer nut portions 60, 62 are selectively coupled by a coupling mechanism. In the illustrated, non-limiting embodiment, the coupling mechanism includes a first plurality of threads 80 arranged at the exterior surface 82 of the inner nut portion 60 and a complementary second plurality of threads 84 formed at the interior surface 86 of the outer nut portion 62. Accordingly, relative rotation of the inner and outer nut portions 60, 62 causes the first and second plurality of threads to engage. In an embodiment, the first and second plurality of threads 80, 84 connecting the inner and outer nut portions 60, 62 are microthreads having a pitch of at least 16 threads per inch and can range up to 80 threads per inch in other embodiments. The total number of threads 66 arranged at the interior surface 68 of the inner nut portion 60 may be significantly less than the threads 80 arranged at the outer surface 82 thereof. The microthreads 80, 84 may have a first threads per inch and the threads 66 may have a second threads per inch, substantially smaller than the first threads per inch. For example, the pitch of the threads 66 may be less than about 20 threads per inch, and in some embodiments, less than 15 threads per inch, less than about 10 threads per inch, or less than about 5 threads per inch. As a result, the overall size of the threads 80 is small compared to the size of the threads 66. In an embodiment, the overall ratio of at least one of the first and second plurality of threads 80, 84 to the threads 66 may be greater than or equal to about 10:1, and in some embodiments, greater than or equal to about 11:1, 12:1, 13:1, 14:1, 15:1, 16:1, 17:1, 18:1, 19:1, and 20:1.

At least one anti-rotation pin 90 may be arranged at the interface between the exterior surface 82 of the inner nut portion 60 and the inner surface 86 of the outer nut portion 62. As shown, at least one outer groove or slot 92 is formed in the inner surface 86 of the outer nut portion 62 and a corresponding inner groove or slot 94 is formed in outer surface 82 of the inner nut portion 60. The inner and outer grooves 92, 94 are sized to receive a portion of an anti-rotation pin 90 therein, similar to a key and keyway. Accordingly, when the microthreads of the inner and outer nut portions 60, 62 are coupled, the inner and outer grooves 92, 94 may be radially aligned and an anti-rotation pin 90 is received therebetween to restrict relative rotation of the inner and outer nut portions 60, 62.

The number of outer grooves 92 formed in the outer nut portion 62 may but need not be equal to the number of inner grooves 94 formed in the inner nut portion 64. Having different numbers of inner and outer grooves 94, 92 may enable finer adjustment of the positioning of the inner nut portion 60 relative to the outer nut portion 62 while still engaging a minimum number of anti-rotation pins 90. For example, the outer nut portion 62 may include six outer grooves 92 and the inner nut portion 60 may include four inner grooves 94 will enable assembly of two anti-rotation pins 90 with an angular mismatch of 15° of less between the outer and inner grooves 92, 94 that do not have an anti-rotation pin 90. Although two anti-rotation pins 90 are illustrated in the non-limiting embodiment, it should be appreciated that embodiments having one or more than two anti-rotation pins, such as three, four, or more than four anti-rotation pins 90 are also within the scope of the disclosure.

During operation of the actuator 50, the load acting on the flange 74 of the outer nut portion 62 is transferred to the inner nut portion 60 via the microthreads 80, 84. The load is then transferred from the inner nut portion 60 to the screw 56 via the threads 66, 70. By forming the inner nut portion 60 from a compliant material, the load applied thereto is distributed over the length of the threads 80, 66.

A nut 54 as described herein provides enhanced flexibility in transferring the load applied to the flange across the length of the nut, resulting in improved wear performance. In addition, by using a compliant material for the inner nut portion 60, the weight of the nut is reduced.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, or equivalent arrangements not heretofore described, but which are commensurate with the spirit and scope of the present disclosure. Additionally, while various embodiments of the present disclosure have been described, it is to be understood that aspects of the present disclosure may include only some of the described embodiments. Accordingly, the present disclosure is not to be seen as limited by the foregoing description but is only limited by the scope of the appended claims.

## Claims

1. A nut for use in an actuator assembly having a rotatable screw, the nut comprising:
an outer nut portion (62);
an inner nut portion (60) removably coupled to the outer nut portion (62), the inner nut portion (60) being rotatably couplable to the rotatable screw; and
at least one anti-rotation pin (90) positionable between the outer nut portion (62) and the inner nut portion (60) to restrict rotation of the inner nut portion (60) relative to the outer nut portion (62).

2. The nut of claim 1, wherein the nut is fixedly mounted within the actuator assembly such that the rotatable screw is movable relative to the nut.

3. The nut of claim 1 or 2, wherein the nut is translatable along an axis relative to the rotatable screw.

4. The nut of any preceding claim, wherein the outer nut portion (62) has a flange arranged at an exterior surface thereof, the flange being connectable to a component to be moved by the actuator assembly.

5. The nut of any preceding claim, wherein the outer nut portion (62) and the inner nut portion (60) are formed different materials.

6. The nut of claim 5, wherein the inner nut portion (60) is formed from a polymer, and/or wherein the outer nut portion (62) is formed from a metal.

7. The nut of any preceding claim, further comprising a first plurality of threads arranged at an outer surface of the inner nut portion (60) and a second plurality of threads arranged at an inner surface of the outer nut portion (62).

8. The nut of claim 7, wherein the first plurality of threads and the second plurality of threads are microthreads.

9. The nut of any preceding claim, further comprising a plurality of threads arranged at an inner surface of the inner nut portion (60), the plurality of threads being couplable to the rotatable screw, and optionally further comprising another plurality of threads arranged at an outer surface of the inner nut portion (60), wherein the plurality of threads has a first threads per inch and the another plurality of threads has a second threads per inch, the second threads per inch being greater than the first threads per inch.

10. An actuator assembly for controlling movement of an aircraft engine door comprising:
a screw rotatable about an axis;
a nut rotatably engaged with the screw, the nut further comprising:
an outer nut portion (62); and
an inner nut portion (60) removably coupled to the outer nut portion (62), the inner nut portion (60) being rotatably fixed to the outer nut portion (62).

11. The system of claim 10, wherein the nut further comprises at least one anti-rotation pin (90) positioned between the outer nut portion (62) and the inner nut portion (60) to restrict rotation of the inner nut portion (60) relative to the outer nut portion (62).

12. The system of claim 10 or 11, wherein the outer nut portion (62) and the inner nut portion (60) are formed different materials, and optionally wherein the inner nut portion (60) is formed from a polymer, and/or wherein the outer nut portion (62) is formed from a metal.

13. The system of any of claims 10 to 12, further comprising a plurality of threads arranged at an inner surface of the inner nut portion (60), the plurality of threads being couplable the screw.

14. The system of any of claims 10 to 13, further comprising a first plurality of threads arranged at an outer surface of the inner nut portion (60) and a second plurality of threads arranged at an inner surface of the outer nut portion (62), and optionally wherein the first plurality of threads and the second plurality of threads are microthreads.

15. The system of claim 12, wherein the nut is coupled to a cowl door, the actuator assembly being operable to move the aircraft engine door between an open position and a closed position.
